(19) Europäisches Patentamt
European Patent Office
Office européen des brevets

(11) EP 4 219 598 B1

(12) EUROPEAN PATENT SPECIFICATION

(45) Date of publication and mention of the grant of the patent:
**11.03.2026 Bulletin 2026/11**

(21) Application number: **22153792.1**

(22) Date of filing: **28.01.2022**

(51) International Patent Classification (IPC):
***C08J 3/00*** *(2006.01)* ***C08J 5/18*** *(2006.01)*
***C08L 23/08*** *(2025.01)*

(52) Cooperative Patent Classification (CPC):
(C-Sets available)
**C08L 23/0815; C08J 5/18;** C08F 4/65912; C08F 4/65916; C08F 210/16; C08J 2323/08; C08J 2423/08; C08L 2205/035; C08L 2207/066
(Cont.)

# (54) POLYETHYLENE BLEND FOR A FILM LAYER

POLYETHYLENMISCHUNG FÜR EINE FOLIENSCHICHT

MÉLANGE DE POLYÉTHYLÈNE POUR UNE COUCHE DE FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.08.2023 Bulletin 2023/31**

(73) Proprietor: **Borealis GmbH**
**1020 Vienna (AT)**

(72) Inventors:
- **WANG, Jingbo**
  **4021 Linz (AT)**
- **BERGER, Friedrich**
  **4021 Linz (AT)**

(74) Representative: **TBK**
**Bavariaring 4-6**
**80336 München (DE)**

(56) References cited:
**EP-A1- 3 298 067**
**WO-A1-2021/191019**
**WO-A1-2022/018239**
**US-A1- 2020 056 004**
**US-B2- 10 494 465**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 4/6492;**
**C08F 210/16, C08F 4/65927;**
**C08L 23/0815, C08L 23/0815, C08L 23/0815;**
C08F 210/16, C08F 210/08, C08F 2500/27, C08F 2500/12;
C08F 210/16, C08F 210/14, C08F 210/08, C08F 2500/27, C08F 2500/12, C08F 2500/26, C08F 2500/39;
C08F 210/16, C08F 210/14, C08F 2500/12, C08F 2500/27, C08F 2500/08;
C08L 2207/066, C08L 2207/066, C08L 2207/066

## Description

The present invention relates to a polyethylene blend of a specific multimodal metallocene catalysed linear low density polyethylene (mLLDPE) and a specific low density polyethylene (LDPE), which provides films with well-balanced properties, especially dart drop (impact strength), haze and processability.

High standards are nowadays required for packaging materials. Quite often properties are required in the packaging industry, which are conflicting. Typically, high stiffness and toughness are required in parallel. To achieve these different properties seldom pure components, but rather combinations of different polymer components are used. Two different approaches mainly are at the skilled person's disposal: (a) blends of two or more polymers to form a heterophasic structure, or (b) producing a multilayer structure with different materials providing different functions. Both of them are applied in industry.

Due to the different requirements nowadays multilayer packaging with different type of materials are used, which from one side serve the needs, but from the other side such structures make recycling difficult. Therefore using pure materials is preferred, i.e. a packaging with 'mono-materials', i.e. only polyethylene based polymers, is really appreciated. However, this imposes higher requirement to the performance of materials themselves, a material with balanced performance is therefore highly appreciated.

mLLDPE attracts specific interests due to its excellence balance between cost and performance. The main drawback is that the processability and optics are rather poor. One common way is to blend the mLLDPE with LDPE, however, this is known to worsen other properties, like sealing and impact.

As stated above the recycling of packaging material after their first use is an important topic nowadays. It is much more challenging to recycle packaging films made of different materials, e.g. different plastics, than to recycle mono-material solutions. On the other hand, the use of different materials is sometimes necessary to obtain acceptable properties, like mechanical properties. Therefore, an objective of the present invention is the provision of a polyethylene based mono-material solution, which provides good processability, good optical properties and mechanical properties, especially dart drop (impact strength). In other words, a material is desirable that provides an advantageous combination of processability, good optics and mechanical properties, especially haze and dart drop, to films prepared from such a material. Relevant prior art documents are WO 2022/018239 A1, EP 3 298 067 A1, WO 2021/191019 A1, US 10 494 465 B2 and US 2020/056004 A1.

The present inventors have found that a blend of a specific multimodal metallocene catalysed linear low density polyethylene (mLLDPE) and a specific low density polyethylene (LDPE), provides films with well-balanced properties, especially dart drop (impact strength), haze and processability.

Summary of Invention

The present invention is therefore directed to a polyethylene blend comprising

a) 51.0 wt% to 95.0 wt%, based on the total weight of the polyethylene blend, of a multimodal metallocene catalysed linear low density polyethylene (mLLDPE) which consists of

(i) 30.0 to 70.0 wt% of an ethylene-1-butene polymer component (A), and
(ii) 70.0 to 30.0 wt% of an ethylene-1-hexene polymer component (B),

whereby the ethylene-1-butene polymer component (A) has

a density in the range of from 920 to 950 kg/$m^3$,
a $MFR_2$ (190°C, 2.16 kg, ISO 1133) in the range of 2.0 to 400.0 g/10 min,
a 1-butene content, based on the ethylene-1-butene polymer component (A), of 1.5 to 8.0 wt%, and

the ethylene polymer component (B) has

a density in the range of from 895 to 918 kg/$m^3$,
a $MFR_2$ (190°C, 2.16 kg, ISO 1133) in the range of 0.01 to 1.5 g/10 min,
a 1-hexene content, based on the ethylene-1-hexene polymer component (B), of 8.0 to 25.0 wt%,

whereby the multimodal metallocene catalysed linear low density polyethylene (mLLDPE) has a density in the range of 905 to 940 kg/$m^3$,

a $MFR_2$ (190°C, 2.16 kg, ISO 1133) in the range of 0.3 to 5.0 g/10 min and

a ratio of the $MFR_{21}$ (190°C, 21.6 kg, ISO 1133) to $MFR_2$ (190°C, 2.16 kg, ISO 1133), $MFR_{21}/MFR_2$, in the range of 20 to 50;
a branching index $g'_{85-100}$ (determined by gel permeation chromatography (GPC) as described in the experimental part) of < 1.00 and

b) 1.0 to 49.0 wt%, based on the total weight of the polyethylene blend, of a low density polyethylene (LDPE) whereby said LDPE has

a density in the range of 910 to 940 kg/$m^3$; and
a $MFR_2$ (190°C, 2.16 kg, ISO 1133) in the range of 1.5 to 20.0 g/10 min,

whereby the ratio of the $MFR_2$ of the LDPE to the $MFR_2$ of the mLLDPE is > 1.00.

In an embodiment of the present invention, the ethylene-1-butene polymer component (A) of the multimodal metallocene catalysed linear low density polyethylene (mLLDPE) consists of an ethylene polymer fraction (A-1) and an ethylene polymer fraction (A-2).

Unexpectedly the above defined blend of the invention provides excellent processability in combination with good dart drop strength and low haze to films comprising such blends. The invention is therefore further direct to films comprising the above defined polyethylene blend.

Definitions

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene catalysed linear low density polyethylene (mLLDPE) is defined in this invention as linear low density polyethylene copolymer, which has been produced in the presence of a metallocene catalyst.

For the purpose of the present invention "metallocene catalysed linear low density polyethylene (mLLDPE) which consists of an ethylene-1-butene polymer component (A) and an ethylene-1-hexene polymer component (B)" means that the mLLDPE is produced in an at least 2-stage sequential polymerization process, wherein first component (A) is produced and component (B) is then produced in the presence of component (A) in a subsequent polymerization step, yielding the mLLDPE or vice versa, i.e. first component (B) is produced and component (A) is then produced in the presence of component (B) in a subsequent polymerization step, yielding the mLLDPE .

Low density polyethylene (LDPE) is defined in this invention as low density polyethylene copolymer, which has been produced in a high-pressure process.

Term "multimodal" in context of multimodal metallocene catalysed linear low density polyethylene means herein multimodality with respect to melt flow rate (MFR) ) of at least the ethylene polymer components (A) and (B), i.e. the ethylene polymer components (A) and (B), have different MFR values. The multimodal metallocene catalysed linear low density polyethylene can have further multimodality between the ethylene polymer components (A) and (B) with respect to one or more further properties, like density, comonomer type and/or comonomer content, as will be described later below.

**Detailed description of Invention**

The polyethylene blend according to the present invention comprises, preferably consists of a) a multimodal metallocene catalysed linear low density polyethylene (mLLDPE) and b) a low density polyethylene (LDPE).

Thus the blend comprises

a) 51.0 wt% to 99.0 wt%, preferably 65.0 wt% to 98.0 wt%, more preferably 75.0 wt% to 96.0 wt% and even more preferably 80.0 wt% to 92.0 wt%, based on the total weight of the polyethylene blend, of the multimodal metallocene catalysed linear low density polyethylene (mLLDPE) and
b) 1.0 to 49.0 wt%, preferably 2.0 wt% to 35.0 wt%, more preferably 4.0 wt% to 25.0 wt% and even more preferably 8.0 wt% to 20.0 wt%, based on the total weight of the polyethylene blend, of the low density polyethylene (LDPE).

In an embodiment the blend consists of a) and b) only, thus the total amounts of a) + b) summing up to 100 wt%.

*Ad multimodal metallocene catalysed linear low density polyethylene (mLLDPE)*

The multimodal metallocene catalysed linear low density polyethylene (mLLDPE) is referred herein as "multimodal", since the ethylene-1-butene polymer component (A), optionally including ethylene polymer fractions (A-1) and (A-2), and ethylene-1-hexene polymer component (B) have been produced under different polymerization conditions resulting in different Melt Flow Rates (MFR, e.g. $MFR_2$). I.e. the multimodal PE is multimodal at least with respect to difference in MFR of the ethylene polymer components (A) and (B).

The multimodal metallocene catalysed linear low density polyethylene (mLLDPE) consists of

(i) 30.0 to 70.0 wt% of an ethylene-1-butene polymer component (A), and
(ii) 70.0 to 30.0 wt% of an ethylene-1-hexene polymer component (B).

The amount of (A) and (B) add up to 100.0 wt%.

In an embodiment of the present invention, the ethylene-1-butene polymer component (A) consists of an ethylene polymer fraction (A-1) and (A-2).

It is possible that fraction (A-1) is produced first and then fraction (A-2) is produced in the presence of fraction (A-1) in a subsequent reactor or vice versa, i.e fraction (A-2) is produced first and then fraction (A-1) is produced in the presence of fraction (A-2) in a subsequent reactor. Preferably fraction (A-1) is produced first.

In case that the ethylene-1-butene polymer component (A) consists of ethylene polymer fractions (A-1) and (A-2), the $MFR_2$ of the ethylene polymer fractions (A-1) and (A-2) may be different from each other or may be the same.

The ethylene polymer fraction (A-1) has a $MFR_2$ (190°C, 2.16 kg, ISO 1133) in the range of 1.0 to 800.0 g/10 min, preferably of 1.5 to 400.0 g/10 min, more preferably of 2.0 to 200.0 g/10 min and even more preferably of 2.5 to 50.0 g/10 min, like 3.0 to 20.0 g/10 min

The ethylene polymer fraction (A-2) has a $MFR_2$ (190°C, 2.16 kg, ISO 1133) in the range of 1.5 to 400.0 g/10 min, preferably of 2.0 to 200.0 g/10 min, more preferably of 2.5 to 40.0 g/10 min and most preferably of 3.0 to 10.0 g/10 min.

The $MFR_2$ of the ethylene polymer components (A) and (B) are different from each other.

The ethylene polymer component (A) has a $MFR_2$ (190°C, 2.16 kg, ISO 1133) in the range of 2.0 to 400 g/10 min, preferably of 2.5 to 300 g/10 min, more preferably of 3.0 to 200 g/10 min, even more preferably of 3.2 to 100 g/10 min and still more preferably of 3.5 to 20.0 g/10 min, like 3.8 to 10.0 g/10 min.

The ethylene polymer component (B) has a $MFR_2$ (190°C, 2.16 kg, ISO 1133) in the range of 0.01 to 1.5 g/10 min, preferably of 0.05 to 1.5 g/10 min, more preferably of 0.1 to 1.2 g/10 min and even more preferably of 0.2 to 1.0 g/10 min.

The $MFR_2$ (190°C, 2.16 kg, ISO 1133) of the multimodal metallocene catalysed linear low density polyethylene (mLLDPE) is in the range of 0.3 to 5.0 g/10 min, preferably 0.8 to 4.0 g/10 min, more preferably 1.0 to 2.5 g/10 min.

The multimodal metallocene catalysed linear low density polyethylene (mLLDPE) has a ratio of the $MFR_{21}$ (190°C, 21.6 kg, ISO 1133) to $MFR_2$ (190°C, 2.16 kg, ISO 1133), $MFR_{21}/MFR_2$, in the range of from 20 to 50, preferably from 22 to 40, more preferably from 24 to 35.

In an embodiment of the invention it is preferred the ratio of the $MFR_2$ (190°C, 2.16 kg, ISO 1133) of ethylene-1-butene polymer component (A) to the $MFR_2$ (190°C, 2.16 kg, ISO 1133) of the final multimodal metallocene catalysed linear low density polyethylene (mLLDPE) is at least 2.0 to 20.0, preferably 2.5 to 15.0 and more preferably of 3.0 to 10.0.

Naturally, in addition to multimodality with respect to, i.e. difference between, the $MFR_2$ of ethylene polymer components (A) and (B), the multimodal PE of the invention can also be multimodal e.g. with respect to the density of the ethylene polymer components (A) and (B).

Preferably, the multimodal metallocene catalysed linear low density polyethylene (mLLDPE) is further multimodal with respect to the comonomer content of the ethylene polymer components (A) and (B).

The comonomer type for the polymer fractions (A-1) and (A-2) is the same, thus both fractions therefore have 1-butene as comonomer.

The comonomer content of component (A) and (B) can be measured, or, in case, and preferably, one of the components is produced first and the other thereafter in the presence of the first produced in so called multistage process, then the comonomer content of the first produced component, e.g. component (A), can be measured and the comonomer content of the other component, e.g. component (B), can be calculated according to following formula:

Comonomer content (wt%) in component B = (comonomer content (wt%) in final product - (weight fraction of component A * comonomer content (wt%) in component A)) / (weight fraction of component B)

The total amount of 1-butene, based on the multimodal metallocene catalysed linear low density polyethylene

(mLLDPE) is preferably in the range of 0.6 to 3.0 wt%, preferably 0.8 to 2.5 wt% and more preferably 1.0 to 2.0 wt%.

The total amount of 1-hexene, based on the multimodal metallocene catalysed linear low density polyethylene (mLLDPE) is preferably in the range of 2.0 to 20.0 wt%, preferably 4.0 to 18.0 wt%m more preferably 5.0 to 15.0 wt% and still more preferably .

The total amount (wt%) of 1-butene, present in the ethylene-1-butene polymer component (A) is of 1.5 to 8.0 wt%, preferably of 1.8 to 6.0 wt%, more preferably of 2.0 to 5.0 wt%, even more preferably of 2.5 to 4.0 wt%, based on the ethylene-1-butene polymer component (A).

The total amount (wt%) of 1-hexene, present in the ethylene-1-hexene polymer component (B) is of 8.0 to 25.0 wt%, preferably of 9.0 to 20.0 wt%, more preferably of 10.0 to 18.0 wt%, based on the ethylene-1-hexene polymer component (B).

Even more preferably the multimodal metallocene catalysed linear low density polyethylene (mLLDPE) of the invention is further multimodal with respect to difference in density between the ethylene polymer component (A) and ethylene polymer component (B). Preferably, the density of ethylene polymer component (A) is different, preferably higher, than the density of the ethylene polymer component (B).

The density of the ethylene polymer component (A) is in the range of 920 to 950 kg/m$^3$, preferably of 922 to 945 kg/m$^3$, more preferably 925 to 940 kg/m$^3$ and/or the density of the ethylene polymer component (B) is of in the range of 895 to 918 kg/m$^3$, preferably of 898 to 915 kg/m$^3$ and more preferably of 900 to 912 kg/m$^3$.

The polymer fraction (A-1) has a density in the range of from 920 to 950 kg/m$^3$, preferably of 922 to 945 kg/m$^3$, more preferably of 925 to 940 kg/m$^3$, like 928 to 935 kg/m$^3$.

The density of the polymer fraction (A-2) is in the range of from 920 to 950 kg/m$^3$, preferably of 925 to 945 kg/m$^3$.

The density of the multimodal metallocene catalysed linear low density polyethylene (mLLDPE) is in the range of 905 to 940 kg/m$^3$, preferably of 910.0 to 930 kg/m$^3$ and more preferably of 915.0 to 925.0 kg/m$^3$.

More preferably the multimodal metallocene catalysed linear low density polyethylene (mLLDPE) is multimodal at least with respect to, i.e. has a difference between, the $MFR_2$, the comonomer content as well as with respect to, i.e. has a difference between the density of the ethylene polymer components, (A) and (B), as defined above, below or in the claims including any of the preferable ranges or embodiments of the polymer composition.

The multimodal metallocene catalysed linear low density polyethylene (mLLDPE) furthermore has a branching index $g'_{85-100}$ of < 1.00, preferably up to 0.98 and more preferably up to 0.96. The branching index $g'_{85-100}$ is preferably at least 0.70, more preferably at least 0.80 and even more preferably at least 0.85.

Thus, preferred ranges are 0.70 to < 1.00, preferably 0.80 to 0.98 and more preferably 0.85 to 0.96.

The branching index $g'_{85-100}$ correlates with the amount of branches of a polymer in the high molecular weight fraction, to be more precise in the fraction which represents 15 wt% of the polymers with the highest molecular weight of the mLLDPEs. The branching index $g'_{85-100}$ is defined in the following way: $g'_{85-100} = \frac{\sum_{i=85}^{100} a_i \times g'_i}{\sum_{i=85}^{100} a_i}$ where g' is defined as the ratio of the intrinsic viscosity of the branched polymer $[IV]_{br}$ over is the intrinsic viscosity of the linear polymer $[IV]_{lin}$ at the same molecular weight ($g' = [IV]_{Br}/[IV]_{lin}$ and $a_i$ is the corresponded area of the concentration detector which is proportional to the weight fraction. Thereby, a low g'-value is an indicator for a high branched polymer. In other words, if the g'-value decreases, the branching content of the polymer increases.

The branching index is determined via GPC-VISC-LS.

It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

The ethylene polymer component (A) is present in an amount of 30.0 to 70.0 wt% based on the multimodal metallocene catalysed linear low density polyethylene (mLLDPE), preferably in an amount of 32.0 to 55.0 wt% and even more preferably in an amount of 34.0 to 45.0 wt%. Thus, the ethylene polymer component (B) is present in an amount of 70.0 to 30.0 wt% based on the multimodal metallocene catalysed linear low density polyethylene (mLLDPE), preferably in an amount of 68.0 to 45.0 wt% and more preferably in an amount of 66.0 to 55.0 wt%.

The multimodal metallocene catalysed linear low density polyethylene (mLLDPE), can be produced in a 2-stage process, preferably comprising a slurry reactor (loop reactor ), whereby the slurry (loop) reactor is connected in series to a gas phase reactor (GPR), whereby either ethylene component (A) or ethylene component (B) is produced in the loop reactor and the other ethylene polymer component is then produced in GPR in the presence of the first produced ethylene polymer component to produce the multimodal metallocene catalysed linear low density polyethylene (mLLDPE), preferably the ethylene polymer component (A) is produced in the loop reactor and the ethylene polymer component (B) is produced in GPR in the presence of the ethylene polymer component (A) to produce the multimodal metallocene catalysed linear low density polyethylene (mLLDPE).

In case that the ethylene component (A) of the multimodal metallocene catalysed linear low density polyethylene (mLLDPE) consists of ethylene polymer fractions (A-1) and (A-2), the multimodal metallocene catalysed linear low density polyethylene (mLLDPE) can be produced with a 3-stage process, preferably comprising a first slurry reactor (loop reactor

1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). The loop reactor 2 is thereby connected in series to a gas phase reactor (GPR), so that the first ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

Such a process is described inter alia in WO 2016/198273, WO 2021009189, WO 2021009190, WO 2021009191 and WO 2021009192. Full details of how to prepare suitable multimodal metallocene catalysed linear low density polyethylene (mLLDPE) can be found in these references.

A suitable process is the Borstar PE process or the Borstar PE 3G process.

The multimodal metallocene catalysed linear low density polyethylene (mLLDPE) according to the present invention is therefore preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt%) of ethylene polymer component (A).

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1 to 5 wt% in respect to the final metallocene catalysed multimodal metallocene catalysed linear low density polyethylene (mLLDPE). This can counted as part of the first ethylene polymer component (A).

*Catalyst*

The multimodal metallocene catalysed linear low density polyethylene (mLLDPE) used in the process of the invention is one made using a metallocene catalyst. A metallocene catalyst comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

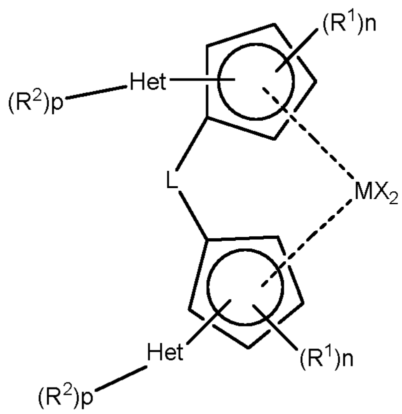

(I)

wherein each X is independently a halogen atom, a $C_{1-6}$-alkyl group, $C_{1-6}$-alkoxy group, phenyl or benzyl group; each Het is independently a monocyclic heteroaromatic group containing at least one heteroatom selected from O or S;

L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1.
Preferably, the compound of formula (I) has the structure

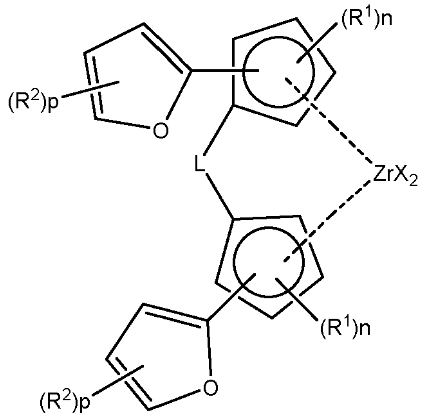

(I´)

wherein each X is independently a halogen atom, a $C_{1-6}$-alkyl, $C_{1-6}$-alkoxy group, phenyl or benzyl group;
L is a $Me_2Si$-;
each R' is the same or different and is a $C_{1-6}$-alkyl group, e.g. methyl or t-Bu;
each n is 1 to 2;
$R^2$ is a $-Si(R)_3$ alkyl group; each p is 1;
each R is $C_{1-6}$-alkyl or phenyl group.

Highly preferred complexes of formula (I) are

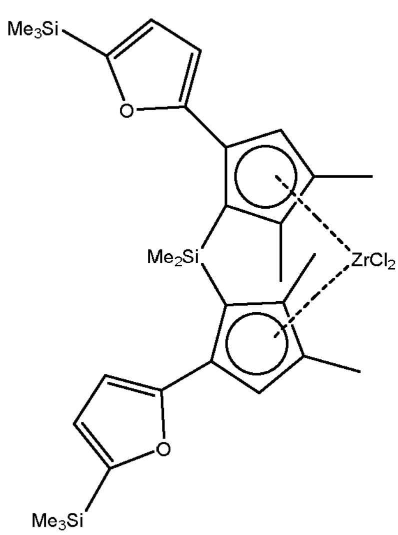

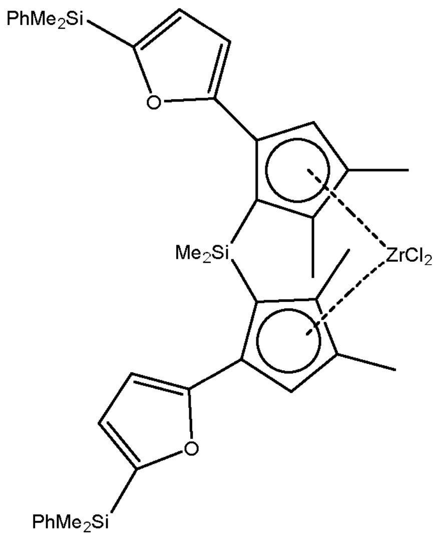

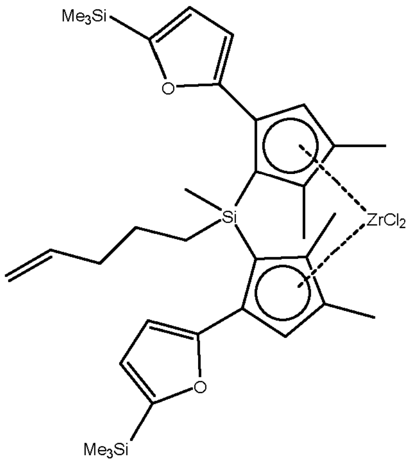

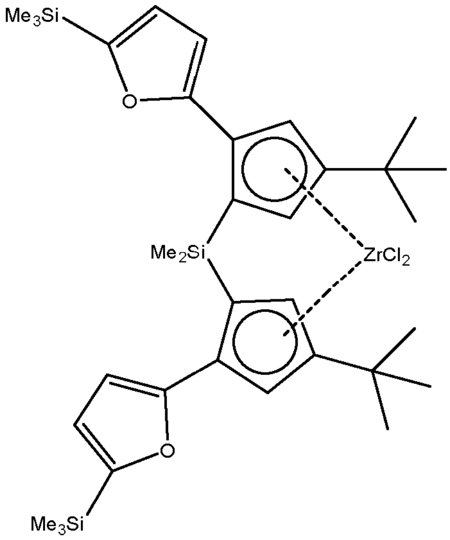

Most preferably the complex dimethylsilanediylbis[2-(5-trimethylsilylfuran-2-yl)-4,5-dimethylcyclopentadien-1-yl] zirconium dichloride is used.

More preferably the ethylene polymer components (A) and (B) of the multimodal metallocene catalysed linear low density polyethylene (mLLDPE) are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

The multimodal metallocene catalysed linear low density polyethylene (mLLDPE) may contain further polymer components and optionally additives and/or fillers. In case the multimodal metallocene catalysed linear low density polyethylene (mLLDPE) contains further polymer components, then the amount of the further polymer component(s) typically varies between 3.0 to 20.0 wt% based on the combined amount of the multimodal metallocene catalysed linear low density polyethylene (mLLDPE) and the other polymer component(s).

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

It is understood herein that any of the additives and/or fillers can optionally be added in so-called master batch, which comprises the respective additive(s) together with a carrier polymer. In such case the carrier polymer is not calculated to the polymer components of the multimodal metallocene catalysed linear low density polyethylene (mLLDPE), but to the amount of the respective additive(s), based on the total amount of the multimodal metallocene catalysed linear low density polyethylene (mLLDPE) (100 wt%).

*Ad low density polyethylene (LDPE)*

The polyethylene blend according to the present invention comprises as component b) a LDPE; whereby said LDPE has a density determined according to ISO 1183 in the range of 910 to 940 kg/m$^3$; and a MFR$_2$ (190°C, 2.16 kg, ISO 1133) in the range of 1.5 to 20.0 g/10 min.

The MFR$_2$ (190°C, 2.16 kg, ISO 1133) is preferably in the range of 5.0 to 18.0 g/10 min, more preferably in the range of 8.0 to 17.0 g/10 min, even more preferably in the range of 10.0 to 16.0 g/10min.

The density determined according to ISO 1183 of the LDPE is preferably in the range of 912 to 935 kg/m$^3$, more preferably in the range of 913 to 930 kg/m$^3$ and even more preferably in the range of 914 to 925 kg/m$^3$.

Suitable LDPEs preferably have a comonomer content of 0.0 wt% to less than 15.0 wt%, more preferably of 0.0 wt% to less than 10.0 wt%, even more preferably of 0.0 wt% to less than 5.0 wt% and still more preferably 0.0 wt% to 1.0 wt%.

LDPEs are well known in the art and are produced in high pressure process usually performed in a tubular reactor or an autoclave.

Such LDPEs typically contain long chain branching which differentiates LDPEs from linear low-density polyethylenes, LLDPEs.

Suitable LDPE's are available commercially from Borealis, Basell, Exxon, Sabic, or other suppliers.

A preferred LDPE for component b) is inter alia commercially available from Borealis AG (Austria) under the trade names CA9150.

*Polyethylene blend*

In the polyethylene blend according to the present invention the ratio of the $MFR_2$ of the LDPE to the $MFR_2$ of the mLLDPE is > 1.0.

Preferably the ratio is at least 2.0, more preferably at least 5.0 and more preferably at least 6.0.

A suitable upper limit for the ratio is 50.0.

Thus, preferably the ratio of the $MFR_2$ of the LDPE to the $MFR_2$ of the mLLDPE is in the range of > 1.00 up to 50.0, more preferably 2.0 to 40.0, yet more preferably 5.0 to 30.0 and even more preferably 6.0 to 20.0

As mentioned above, the polyethylene blend according to the present invention provides excellent processability in combination with good dart drop strength and low haze to films comprising the polyethylene blend of the present invention.

The invention is therefore further direct to films comprising the above defined polyethylene blend.

**Film**

The film of the invention comprises at least one layer comprising the polyethylene blend according to the present invention. The film can be a monolayer film comprising the polyethylene blend according to the present invention or a multilayer film, wherein at least one layer comprises the polyethylene blend according to the present invention. The terms "monolayer film" and multilayer film" have well known meanings in the art.

The films are preferably produced by any conventional film extrusion procedure known in the art including cast film and blown film extrusion. Most preferably, the film is a blown or cast film, especially a blown film. E.g. the blown film is produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the preferable blown or cast film is a multilayer film then the various layers are typically coextruded. The skilled man will be aware of suitable extrusion conditions.

Films according to the present invention may be subjected to post-treatment processes, e.g. surface modifications, lamination or orientation processes or the like. Such orientation processes can be mono-axially (MDO) or bi-axially orientation, wherein mono-axial orientation is preferred.

In another preferred embodiment, the films are unoriented.

Preferred films according to the invention are monolayer blown films.

The monolayer film of the invention may have a thickness of 20 to 120 µm, preferably 30 to 100 µm and more preferably 35 to 80 µm. Films of the invention are preferably not stretched in the machine or transverse or biaxial direction.

The films of the invention are characterized by a dart-drop impact strength (DDI) determined according to ASTM D1709, method A on a 40 µm monolayer test blown film of at least 550 g up to 1500 g , preferably 600 g up to 1400 g and more preferably 700 g up to 1200 g, like 700 g to 1000 g.

Films according to the present invention furthermore have good optics, i.e. haze (measured on a 40 µm monolayer test blown film according to ASTM D 1003-00) of below 15%.

Thus, the films comprising the polyethylene blend as described above may further have a haze (measured on a 40 µm monolayer test blown film according to ASTM D 1003-00) of below 15 %, preferably between 2 % and 12 %, more preferably between 4 % and 10 %.

In one further embodiment of the present invention, the optomechanical ability (OMA) according to formula (II):

$$OMA = \frac{Tensile\ Modulus\ (MD)[MPa] * DDI(g)}{Haze\ (40\ \mu m)[\%]}$$

determined on a 40 µm test blown film is at least 12000 [MPa*g/%] up to 50000 [MPa*g/%], preferably in the range of from 13000 [MPa*g/%] up to 40000 [MPa*g/%], more preferably in the range of from 14000 [MPa*g/%] up to 30000 [MPa*g/%], wherein the Tensile Modulus in machine direction is measured according to ISO 527-3 at 23°C on 40 µm test blown films, DDI is the dart-drop impact strength determined according to ASTM D1709, method A on a 40 µm test blown film and haze is measured according to ASTM D1003 on a 40 µm test blown film.

Thus, in a preferred embodiment, the films comprising the polyethylene blend as described above, are characterized by having at least

a) a dart-drop impact strength (DDI) determined according to ASTM D1709, method A on a 40 μm monolayer test blown film of at least 550 g up to 1500 g , preferably 600 g up to 1400 g and more preferably 700 g up to 1200 g, and
b) a haze (measured on a 40 μm monolayer test blown film according to ASTM D 1003-00) of below 15 %, preferably between 2 % and 12 %, more preferably between 4 % and 10 % and/or
c) an optomechanical ability (OMA) according to formula (II):

$$OMA = \frac{Tensile\ Modulus\ (MD)[MPa] * DDI(g)}{Haze\ (40\ \mu m)[\%]}$$

determined on a 40 μm test blown film of at least 12000 [MPa*g/%] up to 50000 [MPa*g/%], preferably in the range of from 13000 [MPa*g/%] up to 40000 [MPa*g/%], more preferably in the range of from 14000 [MPa*g/%] up to 30000 [MPa*g/%], wherein the Tensile Modulus in machine direction is measured according to ISO 527-3 at 23°C on 40 μm test blown films, DDI is the dart-drop impact strength determined according to ASTM D1709, method A on a 40 μm test blown film and haze is measured according to ASTM D1003 on a 40 μm test blown film.

The films of the invention can be further characterized by a sealing initiation temperature determined as described in the experimental part on a blown film with a thickness of 40 μm of below 100°C, preferably in the range of 60°C to below 100°C, more preferably in the range of 70°C to 95°C, even more preferably in the range of 75°C to 90°C.
In another embodiment of the invention the films may have a hot tack temperature (HTT) of less than 95°C, determined according to ASTM F 1921 - 98 method B on a 40 μm test blown film.
Preferably, the hot tack temperature (HTT) is in the range of 70°C to 92°C, more preferably in the range of 75°C to 90°C and even more preferably in the range of 78°C to 87°C.
The inventive films are fully recyclable and thus improves sustainability, as it is in the most preferred embodiment a "100% PE" solution with no other polymer than ethylene based polymers being present.
In another embodiment the inventive film contains at least 90 wt% of PE polymers, more preferably 95 to 99 wt% of PE polymers (difference to 100 wt% can be other polymers than PE), and is thus also suitable for being recycled.
The inventive blend of a specific multimodal metallocene catalysed linear low density polyethylene (mLLDPE) and a specific low density polyethylene (LDPE) is furthermore very beneficial for making films. Benefits can be seen in lower required melt pressure, which is expected to increase the output of a blown film process.
The films according to the present invention are highly useful for being used in various packaging applications, wherein applications related to food packaging are preferred.
Furthermore the films according to the present invention may be used as a layer in multilayer polyethylene based blown films, preferably as core layer in multilayer polyethylene based blown films.
The invention will be further described with reference to the following non-limiting examples.

**Determination methods**

Unless otherwise stated in the description or in the experimental part, the following methods were used for the property determinations of the polymers (including its fractions and components) and/or any sample preparations thereof as specified in the text or experimental part.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190°C for polyethylene. MFR may be determined at different loadings such as 2.16 kg ($MFR_2$), 5 kg ($MFR_5$) or 21.6 kg ($MFR_{21}$).

*Calculation of $MFR_2$ of Component B and of Fraction (A-2)*

$$logA = x \cdot logB + (1-x) \cdot logC$$

$$C = 10^\wedge \frac{(logA - x.logB)}{(1-x)}$$

*For Component B:*

B = $MFR_2$ of Component (A)
C = $MFR_2$ of Component (B)
A = final $MFR_2$ of multimodal metallocene catalysed linear low density polyethylene (mLLDPE)
X = weight fraction of Component (A)

*For Fraction (A-2):*

B = $MFR_2$ of 1$^{st}$ fraction (A-1)
C = $MFR_2$ of 2$^{nd}$ fraction (A-2)
A = final $MFR_2$ (mixture) of loop polymer (= Component (A))
X = weight fraction of the 1$^{st}$ fraction (A-1)

**Density**

Density of the polymer was measured according to ISO 1183-1

**Comonomer contents:**

**Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra. Quantitative $^{13}C\{^1H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the $_*$B2 sites at 38.3 ppm accounting for the number of reporting sites per comonomer:

$$B = I_{*B2}$$

The amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the ββB2B2 site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the *B4 sites at 39.9 ppm accounting for the number of reporting sites per comonomer:

$$H = I_{*B4}$$

The amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H\ [wt\%] = 100 * (fH * 84.16) / ((fB * 56.11) + (fH * 84.16) + ((1-(fB + fH)) * 28.05))$$

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128. Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239.
Griffin, J.M., Tripon, C., Samoson, A., Filip, C., and Brown, S.P., Mag. Res. in Chem. 2007 45, S1, S198.
Castignolles, P., Graf, R., Parkinson, M., Wilhelm, M., Gaborieau, M., Polymer 50 (2009) 2373 Busico, V., Cipullo, R., Prog. Polym. Sci. 26 (2001) 443.
Busico, V., Cipullo, R., Monaco, G., Vacatello, M., Segre, A.L., Macromoleucles 30 (1997) 6251.
Zhou, Z., Kuemmerle, R., Qiu, X., Redwine, D., Cong, R., Taha, A., Baugh, D. Winniford, B., J. Mag. Reson. 187 (2007) 225.
Busico, V., Carbonniere, P., Cipullo, R., Pellecchia, R., Severn, J., Talarico, G., Macromol. Rapid Commun. 2007, 28, 1128.
Resconi, L., Cavallo, L., Fait, A., Piemontesi, F., Chem. Rev. 2000, 100, 1253.


**GPC-VISC-LS analysis for determination of branching factor g'**

A PL 220 (Agilent) GPC equipped with an infra-red detector (IR4 (PolymerChar, Spain), an online four capillary bridge viscometer (PL-BV 400-HT), and a dual light scattering detector (PL-LS 15/90 light scattering detector) with a 15° and 90° angle was used. 3x Olexis and 1x Olexis Guard columns from Agilent as stationary phase and 1,2,4-trichlorobenzene (TCB, stabilized with 250 mg/L 2,6-Di tert butyl-4-methyl-phenol) as mobile phase at 160 °C and at a constant flow rate of 1 mL/min was applied. 200 μL of sample solution were injected per analysis. All samples were prepared by dissolving 8.0 - 10.0 mg of polymer in 10 mL (at 160 °C) of stabilized TCB (same as mobile phase) for 2,5 hours at 160°C under continuous gentle shaking. The injected concentration of the polymer solution at 160°C ($c_{160°C}$) was determined in the following way.

$$c_{160°C} = \frac{w_{25}}{V_{25}} * 0{,}8772$$

With: $w_{25}$ (polymer weight) and $V_{25}$ (Volume of TCB at 25°C).

**GPC-VISC-LS processing**

For the GPC light scattering approach ($GPC_{LS}$) the inter detector delay volumes were determined with a narrow PS standard (MWD = 1.01) with a molar mass of 130000 g/mol. The corresponding detector constants for the light scattering detector and the online viscometer were determined with the broad standard NIST1475A (Mw = 52000 g/mol and IV=1,01 dl/g). The corresponding used dn/dc for the used PE standard in TCB was 0,094 $cm^3/g$. The calculation was performed using the Cirrus Multi-Offline SEC-Software Version 3.2 (Agilent). The molar mass at each elution slice was calculated by using the 15° light scattering angle. Data collection, data processing and calculation were performed using the Cirrus Multi SEC-Software Version 3.2. The molecular weight was calculated using the option in the Cirrus software "use LS 15 angle" in the field *"sample calculation options* subfield *slice MW data from"*. As dn/dc used for the determination of molecular weight a value of 0.094 was used. Molecular weight averages (Mz(LS), Mw(LS) and Mn(LS)), Molecular weight distribution (MWD) and its broadness, described by polydispersity, PD(LS)= Mw(LS)/Mn(LS) (wherein Mn(LS) is the number average molecular weight and Mw(LS) is the weight average molecular weight obtained from GPC-LS) were calculated by Gel Permeation Chromatography (GPC) using the following formulas:

$$M_n(LS) = \frac{\sum_{i=1}^{N} A_i}{\sum(A_i / M_{i(LS)})} \quad (1)$$

$$M_w(LS) = \frac{\sum_{i=1}^{N}(A_i x\, M_{i(LS)})}{\sum A_i} \quad (2)$$

$$M_z(LS) = \frac{\sum_{i=1}^{N}(A_i \, x \, M_{i(LS)}^2)}{\sum(A_i / M_i(LS))} \quad (3)$$

For a constant elution volume interval $\Delta V_i$, where $A_i$ and $M_{i(LS)}$ are the chromatographic peak slice area and polyolefin molecular weight (MW) determined by GPC-LS.

*Calculation of Branching Index g'$_{85\text{-}100}$*

The relative amount of branching is determined using the g'-index of the branched polymer sample. The long chain branching (LCB) index is defined as $g' = [\eta]_{br}/[\eta]_{lin}$. It is well known if the g' value increases the branching content decreases. $[\eta]$ is the intrinsic viscosity at 160 °C in TCB of the polymer sample at a certain molecular weight and is measured by an online viscosity and a concentration detector, where $[\eta]_{lin}$ is the intrinsic viscosity of the linear polymer having the same chemical compostion. The intrinsic viscosities were measured as described in the handbook of the Cirrus Multi-Offline SEC-Software Version 3.2 with use of the Solomon-Gatesman equation. The $[\eta]_{lin}$ at a certain molecular weight was obtained using the Mark Houwink constant:

$$IV = K_{LLDPE} * M^{\alpha} \quad \text{(equation 1)}$$

The constants K and $\alpha$ are specific for a polymer-solvent system and M is the molecular weight obtained from LS analysis.

To encounter for the amount of comonomer content in the polyethylene-co-alpha-olefine the $[K]_{LLDPE}$ needs to be modified in the following way:

$$K_{LLDPE} = (1\text{-}(1\text{-}2/x * \text{wt.-\%*(alpha-olefine)})^{1+\alpha} * K_{PE} \quad \text{(equation 2)}$$

Where x is the amount of C atoms in the alpha olefine and $K_{PE}$ is determined by analysing the linear homo PE (NIST 1475a) using $\alpha$ = 0,725 and the content of the alpha-olefine is determined by $^{13}$C-NMR. Normally $K_{PE}$ is between 0.00039 and 0.00042.

An IR detector determines the necessary concentration of each elution slice.

$[\eta]_{lin}$ is the intrinsic viscosity of a linear sample and $[\eta]_{br}$ the viscosity of a branched sample of the same molecular weight and chemical composition. By dividing the intrinsic viscosity of a branched sample $[IV_b]$ with the intrinsic viscosity of a linear polymer $[IV_l]$ at the same molecular weight, the viscosity branching factor *g'* can be calculated.

In this case the $g'_{(85\text{-}100)}$ are calculated by adding the product of $g'_M * a_M$ in the range where the cumulative fraction is 85% to 100% and dividing it through the corresponded signal area of the concentration signal, $a_i$.

$$g'_{(85-100)} = \frac{\sum_{85}^{100} a_i * \frac{[\eta]_{br,i}}{[\eta]_{lin,i}}}{\sum_{85}^{100} a_i} = \frac{\sum_{85}^{100} a_i * g'_i}{\sum_{85}^{100} a_i}$$

**Dart drop strength (DDI): Impact resistance by free-falling dart method**

This test method covers the determination of the energy that causes films to fail under specified conditions of impact of a free-falling dart from a specified height that would result in failure of 50 % of the specimens tested (ASTM D1709; Alternative testing technique - method A).

By this technique, successive groups of twenty specimens each are tested. One missile weight is employed for each group and missile weight is varied in increments from group to group.

Deviating from ASTM D1709-16a the test was performed on several film strips of a sample with at least 4 different weights. 20 specimens per weight were tested, so that a break range of 5 % - 95 % was covered. It must be ensured that at least one weight is determined in the breaking range of 5 % - 25 %, at least two weights in the breaking range of 30 % - 70 %, and at least one weight in the breaking range of 75 % - 95 %. The selection of the weights can be done in uneven steps. A film strip was taken across the width of the sample and measured on a thickness measuring device.

<u>Standard conditions:</u>

Conditioning time: > 96 h
Test temperature: 23 °C
Dart head material: phenolic
Dart diameter: 38 mm
Drop height: 660 mm

Results:

Impact failure weight - 50% [g]

**Tensile modulus**

Tensile modulus (E-Mod (MPa) was measured in machine and/or transverse direction according to ISO 527-3 on film samples prepared as described under the Film Sample preparation with film thickness of 40 μm and at a cross head speed of 1 mm/min for the modulus.

**Haze**

Haze was determined according to ASTM D 1003-00 on films as produced indicated below.
**Hot Tack temperature** (lowest temperature to get maximum Hot tack force) and **Hot tack force** (maximum Hot tack force) were measured according to ASTM F 1921 method B on a blown film of 40 μm thickness with below settings:

Q-name instrument: Hot Tack - Sealing Tester
Model: J&B model 4000 MB
Sealbar length: 50 [mm]
Seal bar width: 5 [mm]
Seal bar shape: flat
Seal Pressure: 0.15 $N/mm^2$
Seal Time: 1s
Coating of sealing bars: NIPTEF ®
Roughness of coating sealing bars: 1 [μm]
Film Specimen width: 25 mm
Cool time: 0.2 s
Peel Speed: 200 mm/s
Start temperature: 50 °C
End temperature: burn through and/or shrinking
Increments: 5 °C

All film test specimens were prepared in standard atmospheres for conditioning and testing at 23 °C (± 2 °C) and 50 % (± 10 %) relative humidity. The minimum conditioning time of test specimen in standard atmosphere just before start testing is at least 40 h. The minimum storage time between extrusion of film sample and start testing is at least 88 h. The hot-tack measurement determines the strength of heat seals formed in the films, immediately after the seal has been made and before it cools to ambient temperature.
The hot-tack force was measured as a function of temperature within the temperature range and with temperature increments as indicated above. The number of test specimens were at least 3 specimens per temperature. The Hot-tack force is evaluated as the highest force (maximum peak value) with failure mode "peel".

**Sealing initiation temperature (SIT); sealing end temperature (SET), sealing range:**

The method determines the sealing temperature range (sealing range) of polyethylene films, in particular blown films or cast films. The sealing temperature range is the temperature range, in which the films can be sealed according to conditions given below.
The lower limit (heat sealing initiation temperature (SIT)) is the sealing temperature at which a sealing strength of ≥ 5 N is achieved. The upper limit (sealing end temperature (SET)) is reached, when the films stick to the sealing device.
The measurement was done according to the slightly modified ASTM F1921 - 12, where the test parameters sealing pressure, cooling time and test speed have been modified. The determination of the force/temperature curve was continued until thermal failure of the film.
The sealing range was determined on a J&B Universal Sealing Machine Type 4000 with a blown film of 40 μm

thickness with the following further parameters:

Conditioning time: > 96 h
Specimen width: 25 mm
Sealing pressure: 0.4 $N/mm^2$ (PE)
Sealing time: 1 sec
Delay time: 30 sec
Sealing jaws dimension: 50x5 mm
Sealing jaws shape: flat
Sealing jaws coating: Niptef
Sealing temperature: ambient - 240°C
Sealing temperature interval: 5°C
Start temperature: 50°C
Grip separation rate: 42 mm/sec

**Film sample preparation**

The test films consisting of the inventive blend and respective comparative films of 40 μm thickness, were prepared using a Collin 30 lab scale mono layer blown film line. The film samples were produced at 194°C, a 1:2.5 blow-up ratio, frostline distance of 120 mm.

The compounding for the blends for IE1 and CE2 was done on a co-rotating TSE16 twin screw extruder with melt temperature of 200°C. The blends further contained 0.2 wt% of Irganox B215 (BASF) and 0.1 wt% of calcium stearate (Bäerlocher) as acid scavenger (AS).

The blend for CE2 was prepared directly in the line.

**Examples:**

*Materials used:*

mLLDPE:

For Comparative Example CE2 as mLLDPE: Anteo™ FK1820: bimodal ethylene/1-butene/1-hexene terpolymer with a density of 918 $kg/m^3$, $MFR_2$ (190°C/2.16kg) of 1.5 g/10min, $MFR_{21}/MFR_2$ = 19.1, g' = 1.00 produced with a metallocene catalyst; commercially available from Borouge. It contains antioxidant and processing aid.

LDPEs:

FT5230: LDPE commercial available from Borealis density is 923 $kg/m^3$ and $MFR_2$ 0.75 g/10min.

CA9150: LDPE commercial available from Borealis, density is 915 $kg/m^3$ and $MFR_2$ 15 g/10min

**Cat.Example: Catalyst preparation (CAT1 - for inventive Examples)**

*Loading of SiO2:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring was turned to 40 rpm during the MAO/tol/MC addition. MAO/tol/MC solution (22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

**Polymerization:**

Borstar pilot plant with a 3-reactor set-up (loop1 - loop2 - GPR 1) and a prepolymerization loop reactor.

mLLDPE was produced by using the polymerization conditions as given in Table 1.

**Table 1:** Polymerization conditions for mLLDPE

| | mLLDPE for IE1 and CE1 |
|---|---|
| **Catalyst** | CAT1 |
| **Prepoly reactor** | |
| Temp. (°C) | 50 |
| Press. (kPa) | 5615 |
| C2 (kg/h) | 4.0 |
| H2(g/h) | 0.0 |
| C4 (g/h) | 79.0 |
| Split (wt%) | 3.4 |
| **loop 1 Fraction (A-1)** | |
| Temp. (°C) | 85 |
| Press. (kPa) | 5543 |

| | |
|---|---|
| C2 conc. (mol%) | 2.9 |
| H2/C2 ratio (mol/kmol) | 0.56 |
| C4/C2 ratio (mol/kmol) | 148.0 |
| Split (wt%) | 18.5 |
| Density (kg/m3) of loop 1 material (fraction (A-1)) | 930 |
| MFR2 (g/10 min) of loop 1 material (fraction (A-1)) | 5.1 |
| **loop 2** | |
| Temp. (°C) | 85 |
| Press. (kPa) | 5335 |
| C2 conc. (mol%) | 3.8 |
| H2/C2 ratio (mol/kmol) | 0.3 |
| C4/C2 ratio (mol/kmol) | 108 |
| Split (wt%) | 19.0 |
| Density (kg/m3) after loop 2 (component (A)) | 930.4 |
| MFR2 (g/10 min) after loop 2 (component (A)) | 5.0 |
| MFR2 (g/10 min) of loop 2 material (fraction (A-2)) | 4.9 |
| Density (kg/m3) of loop 2 material (fraction (A-2)) | 931 |
| C4 (wt%) after loop 2 material (Component (A)) | 3.7 |
| **GPR** | |
| Temp. (°C) | 70 |
| Press. (kPa) | 2000 |
| H2/C2 ratio (mol/kmol) | 1.10 |
| C6/C2 ratio (mol/kmol) | 8.8 |
| Split (wt%) | 59.1 |
| MFR2 (g/10 min) of GPR material (Component (B)) | 0.6 |
| Density (kg/m3) of GPR material (Component (B)) | 909 |
| C6 (wt%) of GPR material Component (B)) | 12,7 |

**Table 2:** Material properties of mLLDPE

| **Material** | **mLLDPE-1** |
|---|---|
| $MFR_2$ (g/10 min) (final) | 1.5 |
| $MFR_{21}$ (g/10 min) | 44.1 |
| $MFR_{21}/MFR_2$ | 27.6 |
| Density (kg/m$^3$) | 918 |
| C4 (wt%) | 1.5 |
| C6 (wt%) | 7.5 |
| $g'_{85-100}$ | 0.94 |

**Monolayer blown films**

The above produced mLLDPE, as well as FK1820 were blended with the LDPE.

The following films have been produced with the above described method (film sample preparation).

**Table 3:** Inventive and Comparative Films

| | | CE1 | CE2 | IE1 |
|---|---|---|---|---|
| mLLDPE | wt% | 89.7 | - | 89.7 |
| FK1820 | w% | - | 90 | - |
| B215 | wt% | 0.2 | - | 0.2 |
| AS | wt% | 0.1 | - | 0.1 |
| FT5230 | wt% | 10 | - | - |
| CA9150 | wt% | - | 10 | 10 |
| MFR ratio LDPE/mLLDPE | | 0.5 | 10 | 10 |
| Film preparation | | | | |
| Melt temperature | °C | 186 | 187 | 186 |
| Melt pressure | bar | 206 | 187 | 190 |
| Take off speed | m/min | 7.2 | 7.5 | 7.2 |
| Film properties | | | | |
| TM/MD | MPa | 188 | 187 | 179 |
| TM/TD | MPa | 205 | 207 | 203 |
| Haze | % | 8.3 | 7.7 | 7.7 |
| DDI | g | 526 | 296 | 741 |
| SIT | °C | 89 | 87 | 86 |
| HTF | N | 2.34 | 2.95 | 2.89 |
| HTT | °C | 85 | 88 | 84 |
| OMA | | 11914 | 7198 | 17226 |

The data demonstrates that using the specific mLLDPE blended with specific LDPEs leads to an excellent combination of good processability, good DDI and good optics.

By comparing IE1 with CE1 it can be seen that the choice of the LDPE (especially in view of the MFR ratio of LDPE/mLLDPE) has an influence on the processability. The melt pressure needed in IE1 is more than 10 bar less than for CE1. Also the overall performance (OMA) is increased for IE1 compared to CE1.

By comparing IE1 and CE2 it can be seen that the specific design of the mLLDPE provides blends with clearly improved DDI and clearly increased overall performance (OMA).

## Claims

**1.** A polyethylene blend comprising

a) 51.0 wt% to 95.0 wt%, based on the total weight of the polyethylene blend, of a multimodal metallocene catalysed linear low density polyethylene (mLLDPE) which consists of

(i) 30.0 to 70.0 wt% of an ethylene-1-butene polymer component (A), and
(ii) 70.0 to 30.0 wt% of an ethylene-1-hexene polymer component (B),

whereby the ethylene-1-butene polymer component (A) has

a density in the range of 920 to 950 kg/$m^3$,
a $MFR_2$ (190°C, 2.16 kg, ISO 1133) in the range of 2.0 to 400.0 g/10 min,
a 1-butene content in the range of 1.5 to 8.0 wt%, based on the ethylene-1-butene polymer

component (A) and

the ethylene polymer component (B) has

a density in the range of 895 to 918 kg/$m^3$,
a $MFR_2$ (190°C, 2.16 kg, ISO 1133) in the range of 0.01 to 1.5 g/10 min
a 1-hexene content in the range of 8.0 to 25.0 wt% based on the ethylene-1-hexene polymer compound (B),

whereby the multimodal metallocene catalysed linear low density polyethylene (mLLDPE) has a density in the range of 905 to 940 kg/$m^3$,

a $MFR_2$ (190°C, 2.16 kg, ISO 1133) in the range of 0.3 to 5.0 g/10 min and
a ratio of the $MFR_{21}$ (190°C, 21.6 kg, ISO 1133) to $MFR_2$ (190°C, 2.16 kg, ISO 1133), $MFR_{21}/MFR_2$, in the range of 20 to 50;
a branching index $g'_{85-100}$ (determined by gel permeation chromatography (GPC) as described in the experimental part) of < 1.00 and

b) 1.0 to 49.0 wt%, based on the total weight of the polyethylene blend, of a low density polyethylene (LDPE) whereby said LDPE has

a density in the range of 910 to 940 kg/$m^3$; and
a $MFR_2$ (190°C, 2.16 kg, ISO 1133) in the range of 1.5 to 20.0 g/10 min, whereby the ratio of the $MFR_2$ of the LDPE to the $MFR_2$ of the mLLDPE is > 1.0.

**2.** The polyethylene blend according to claim 1, wherein in the multimodal metallocene catalysed linear low density polyethylene (mLLDPE) the ethylene-1-butene polymer component (A) consists of an ethylene polymer fraction (A-1) and an ethylene polymer fraction (A-2),

wherein the ethylene polymer fraction (A-1) has

a density in the range of 920 to 950 kg/$m^3$, preferably of 922 to 945 kg/$m^3$, more preferably of 925 to 940 kg/$m^3$ and
a $MFR_2$ (190°C, 2.16 kg, ISO 1133) in the range of 1.0 to 800.0 g/10 min, preferably of 1.5 to 400.0 g/10 min, more preferably of 2.0 to 200.0 g/10 min and even more preferably of 2.5 to 50.0 g/10 min, and

the ethylene polymer fraction (A-2) has

a density in the range of from 920 to 950 kg/$m^3$, preferably of 925 to 945 kg/$m^3$ and
a $MFR_2$ (190°C, 2.16 kg, ISO 1133) in the range of 1.5 to 400.0 g/10 min, preferably of 2.0 to 200.0 g/10 min, more preferably of 2.5 to 40.0 g/10 min and most preferably of 3.0 to 10.0 g/10 min.

**3.** The polyethylene blend according to claim 1 or 2, wherein in the multimodal metallocene catalysed linear low density polyethylene (mLLDPE)

- the ethylene polymer component (A) has a $MFR_2$ (190°C, 2.16 kg, ISO 1133) of 2.5 to 300 g/10 min, preferably of 3.0 to 200 g/10 min, more preferably of 3.2 to 100 g/10 min, still more preferably of 3.5 to 20 g/10 min and
- the ethylene polymer component (B) preferably has a $MFR_2$ (190°C, 2.16 kg, ISO 1133) of 0.05 to 1.5 g/10 min, more preferably of 0.1 to 1.2 g/10 min and even more preferably of 0.2 to 1.0 g/10 min.

**4.** The polyethylene blend according to any of the preceding claims, wherein in the multimodal metallocene catalysed linear low density polyethylene (mLLDPE) the ratio of the $MFR_{21}$ (190°C, 21.6 kg, ISO 1133) to $MFR_2$ (190°C, 2.16 kg, ISO 1133), $MFR_{21}/MFR_2$ is in the range of from 22 to 40 and preferably from 24 to 35.

**5.** The polyethylene blend according to any of the preceding claims, wherein in the multimodal metallocene catalysed linear low density polyethylene (mLLDPE) the total amount of 1-butene, based on metallocene catalysed linear low density polyethylene (mLLDPE), is in the range of from 0.6 to 3.0 wt%, preferably 0.8 to 2.5 wt% and more preferably 1.0 to 2.0 wt% and

the total amount of 1-hexene, based on the metallocene catalysed linear low density polyethylene (mLLDPE) is in the range of 2.0 to 20.0 wt%, preferably 4.0 to 18.0 wt%, more preferably 5.0 to 15.0 wt% and still more preferably 5.0 to 10.0 wt%.

**6.** The polyethylene blend according to any of the preceding claims, wherein the multimodal metallocene catalysed linear low density polyethylene (mLLDPE) has a branching index $g'_{85-100}$ (determined by gel permeation chromatography (GPC) as described in the experimental part) in the range of 0.80 to 0.98, preferably 0.85 to 0.96.

**7.** The polyethylene blend according to any of the preceding claims, wherein the multimodal metallocene catalysed linear low density polyethylene (mLLDPE) is produced in the presence of metallocene complex of formula (I):

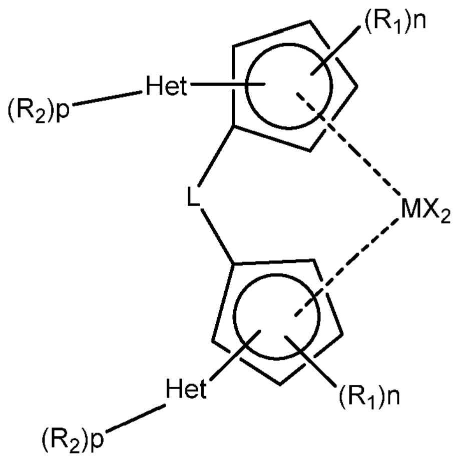

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R_1$ is the same or different and is a $C_{1-6}$-alkyl group or $C_{1-6}$-alkoxy group; each n is 1 to 2;
each $R_2$ is the same or different and is a $C_{1-6}$-alkyl group, $C_{1-6}$-alkoxy group or - $Si(R)_3$ group;
each R is $C_{1-10}$-alkyl or phenyl group optionally substituted by 1 to 3 $C_{1-6}$-alkyl groups; and
each p is 0 to 1.

**8.** The polyethylene blend according to any of the preceding claims, wherein the LDPE has a $MFR_2$ (190°C, 2.16 kg, ISO 1133) in the range of 5.0 to 18.0 g/10 min, preferably in the range of 8.0 to 17.0 g/10 min, more preferably in the range of 10.0 to 16.0 g/10min and/or
a density in the range of 912 to 935 kg/m$^3$, preferably in the range of 913 to 930 kg/m$^3$ and more preferably in the range of 914 to 925 kg/m$^3$.

**9.** The polyethylene blend according to any of the preceding claims, wherein the blend consists of

a) 65.0 wt% to 98.0 wt%, preferably 75.0 wt% to 96.0 wt%, more preferably 80.0 wt% to 92.0 wt%, based on the total weight of the polyethylene blend, of the multimodal metallocene catalysed linear low density polyethylene (mLLDPE) and
b) 2.0 to 35.0 wt%, preferably 4.0 wt% to 25.0 wt%, more preferably 8.0 wt% to 20.0 wt%, based on the total weight of the polyethylene blend, of the low density polyethylene (LDPE), thus the total amounts of a) + b) summing up to 100 wt%.

**10.** The polyethylene blend according to any of the preceding claims, wherein in the blend the ratio of the $MFR_2$ of the LDPE to the $MFR_2$ of the mLLDPE is in the range of > 1.0 up to 50.0, preferably 2.0 to 40.0, more preferably 5.0 to 30.0 and even more preferably 6.0 to 20.0

**11.** Use of the polyethylene blend according to any of the preceding claims for the preparation of a monolayer blown film.

**12.** A monolayer blown film, comprising a polyethylene blend according to any of the preceding claims 1 to 10, wherein the film is **characterized by** having

a) a dart-drop impact strength (DDI) determined according to ASTM D1709, method A on a 40 μm monolayer test blown film of at least 550 g up to 1500 g, preferably 600 g up to 1400 g and more preferably 700 g up to 1200 g and
b) a haze (measured on a 40 μm monolayer test blown film according to ASTM D 1003-00) of below 15 %, preferably between 2 % and 12 %, more preferably between 4 % and 10 %.

**13.** The monolayer blown film according to claim 12, wherein the film furthermore has
c) an optomechanical ability (OMA) according to formula (II):

$$OMA = \frac{Tensile\ Modulus\ (MD)[MPa] * DDI\ (g)}{Haze\ (40\ \mu m)[\%]}$$

determined on a 40 μm test blown film of at least 12000 [MPa*g/%] up to 50000 [MPa*g/%], preferably in the range of from 13000 [MPa*g/%] up to 40000 [MPa*g/%], more preferably in the range of from 14000 [MPa*g/%] up to 30000 [MPa*g/%], wherein the Tensile Modulus in machine direction is measured according to ISO 527-3 at 23°C on 40 μm test blown films , DDI is the dart-drop impact strength determined according to ASTM D1709, method A on a 40 μm test blown film and haze is measured according to ASTM D1003 on a 40 μm test blown film.

**14.** Use of the film according to any of the preceding claims 12 to 13 as packing material, in particular as a packing material for food.

**15.** Use of the film according to any of the preceding claims 12 to 13 as a layer in multilayer polyethylene based blown films, preferably as core layer in multilayer polyethylene based blown films.

## Patentansprüche

**1.** Polyethylenmischung umfassend

a) 51,0 Gew.-% bis 95,0 Gew.-%, bezogen auf das Gesamtgewicht der Polyethylenmischung, eines multimodalen Metallocen-katalysierten linearen Polyethylens niedriger Dichte (mLLDPE), bestehend aus

(i) 30,0 bis 70,0 Gew.-% einer Ethylen-1-Buten-Polymerkomponente (A), und
(ii) 70,0 bis 30,0 Gew.-% einer Ethylen-1-Hexen-Polymerkomponente (B),

wobei die Ethylen-1-Buten-Polymerkomponente (A)

eine Dichte im Bereich von 920 bis 950 kg/m$^3$,
eine $MFR_2$ (190°C, 2,16 kg, ISO 1133) im Bereich von 2,0 bis 400,0 g/10 min,
einen 1-Buten-Gehalt im Bereich von 1,5 bis 8,0 Gew.-%, bezogen auf die Ethylen-1-Buten-Polymerkomponente (A) aufweist und

die Ethylen-Polymerkomponente (B)

eine Dichte im Bereich von 895 bis 918 kg/m$^3$,
eine $MFR_2$ (190°C, 2,16 kg, ISO 1133) im Bereich von 0,01 bis 1,5 g/10 min,
einen 1-Hexen-Gehalt im Bereich von 8,0 bis 25,0 Gew.-%, bezogen auf die Ethylen-1-Hexen-Polymerverbindung (B) aufweist,

wobei das multimodale Metallocen-katalysierte lineare Polyethylen niedriger Dichte (mLLDPE)
eine Dichte im Bereich von 905 bis 940 kg/m$^3$,

eine $MFR_2$ (190°C, 2,16 kg, ISO 1133) im Bereich von 0,3 bis 5,0 g/10 min und
ein Verhältnis der $MFR_{21}$ (190°C, 21,6 kg, ISO 1133) zur $MFR_2$ (190°C, 2,16 kg, ISO 1133), $MFR_{21}/MFR_2$, im Bereich von 20 bis 50;

einen Verzweigungsindex $g'_{85-100}$ (bestimmt durch Gelpermeationschromatographie (GPC) wie im experimentellen Teil beschrieben) von < 1,00 aufweist und

b) 1,0 bis 49,0 Gew.-%, bezogen auf das Gesamtgewicht der Polyethylenmischung, eines Polyethylens niedriger Dichte (LDPE), wobei das LDPE

eine Dichte im Bereich von 910 bis 940 $kg/m^3$; und
eine $MFR_2$ (190°C, 2,16 kg, ISO 1133) im Bereich von 1,5 bis 20,0 g/10 min aufweist,

wobei das Verhältnis der $MFR_2$ des LDPE zur $MFR_2$ des mLLDPE > 1,0 ist.

**2.** Polyethylenmischung nach Anspruch 1, wobei in dem multimodalen Metallocen-katalysierten linearen Polyethylen niedriger Dichte (mLLDPE) die Ethylen-1-Buten-Polymerkomponente (A) aus einer Ethylen-Polymerfraktion (A-1) und einer Ethylen-Polymerfraktion (A-2) besteht,

wobei die Ethylen-Polymerfraktion (A-1)

eine Dichte im Bereich von 920 bis 950 $kg/m^3$, bevorzugt von 922 bis 945 $kg/m^3$, mehr bevorzugt von 925 bis 940 $kg/m^3$ und
eine $MFR_2$ (190°C, 2,16 kg, ISO 1133) im Bereich von 1,0 bis 800,0 g/10 min, bevorzugt von 1,5 bis 400,0 g/10 min, mehr bevorzugt von 2,0 bis 200,0 g/10 min und noch mehr bevorzugt von 2,5 bis 50,0 g/10 min, aufweist, und

die Ethylen-Polymerfraktion (A-2)

eine Dichte im Bereich von 920 bis 950 $kg/m^3$, bevorzugt von 925 bis 945 $kg/m^3$ und
eine $MFR_2$ (190°C, 2,16 kg, ISO 1133) im Bereich von 1,5 bis 400,0 g/10 min, bevorzugt von 2,0 bis 200,0 g/10 min, mehr bevorzugt von 2,5 bis 40,0 g/10 min und am meisten bevorzugt von 3,0 bis 10,0 g/10 min aufweist.

**3.** Polyethylenmischung nach Anspruch 1 oder 2, wobei in dem multimodalen Metallocen-katalysierten linearen Polyethylen niedriger Dichte (MLLDPE)

- die Ethylen-Polymerkomponente (A) eine $MFR_2$ (190°C, 2,16 kg, ISO 1133) von 2,5 bis 300 g/10 min, bevorzugt von 3,0 bis 200 g/10 min, mehr bevorzugt von 3,2 bis 100 g/10 min, noch mehr bevorzugt von 3,5 bis 20 g/10 min aufweist und
- die Ethylen-Polymerkomponente (B) bevorzugt eine $MFR_2$ (190°C, 2,16 kg, ISO 1133) von 0,05 bis 1,5 g/10 min, mehr bevorzugt von 0,1 bis 1,2 g/10 min und noch mehr bevorzugt von 0,2 bis 1,0 g/10 min aufweist.

**4.** Polyethylenmischung nach einem der vorhergehenden Ansprüche, wobei in dem multimodalen Metallocen-katalysierten linearen Polyethylen niedriger Dichte (mLLDPE) das Verhältnis der $MFR_{21}$ (190°C, 21,6 kg, ISO 1133) zur $MFR_2$ (190°C, 2,16 kg, ISO 1133), $MFR_{21}/MFR_2$ im Bereich von 22 bis 40 und bevorzugt von 24 bis 35 ist.

**5.** Polyethylenmischung nach einem der vorhergehenden Ansprüche, wobei in dem multimodalen Metallocen-katalysierten linearen Polyethylen niedriger Dichte (mLLDPE) die Gesamtmenge an 1-Buten, bezogen auf Metallocen-katalysiertes lineares Polyethylen niedriger Dichte (mLLDPE), im Bereich von 0,6 bis 3,0 Gew.-%, bevorzugt 0,8 bis 2,5 Gew.-% und mehr bevorzugt 1,0 bis 2,0 Gew.-% ist und
die Gesamtmenge an 1-Hexen, bezogen auf das Metallocen-katalysierte lineare Polyethylen niedriger Dichte (mLLDPE), im Bereich von 2,0 bis 20,0 Gew.-%, bevorzugt 4,0 bis 18,0 Gew.-%, mehr bevorzugt 5,0 bis 15,0 Gew.-% und noch mehr bevorzugt 5,0 bis 10,0 Gew.-% ist.

**6.** Polyethylenmischung nach einem der vorhergehenden Ansprüche, wobei das multimodale Metallocen-katalysierte lineare Polyethylen niedriger Dichte (mLLDPE) einen Verzweigungsindex $g'_{85-100}$ (bestimmt durch Gelpermeationschromatographie (GPC) wie im experimentellen Teil beschrieben) im Bereich von 0,80 bis 0,98, bevorzugt 0,85 bis 0,96, aufweist.

**7.** Polyethylenmischung nach einem der vorhergehenden Ansprüche, wobei das multimodale Metallocen-katalysierte lineare Polyethylen niedriger Dichte (mLLDPE) in der Gegenwart eines Metallocenkomplexes der Formel (I) her-

gestellt wird:

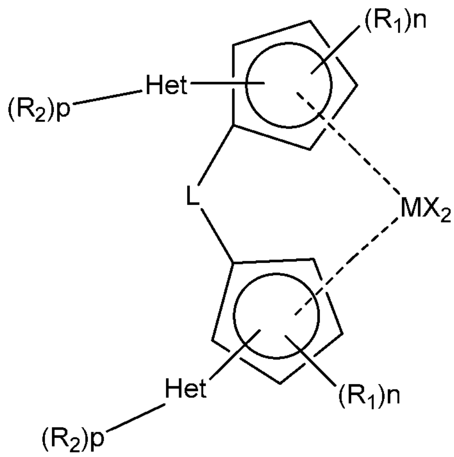

(I)

wobei jedes X unabhängig ein Halogenatom, eine $C_{1-6}$-Alkylgruppe, $C_{1-6}$-Alkoxygruppe, Phenyl- oder Benzylgruppe ist;
jedes Het unabhängig eine monocyclische heteroaromatische Gruppe ist, die mindestens ein Heteroatom, ausgewählt aus O oder S, enthält;
L -$R'_2$Si- ist, wobei jedes R' unabhängig $C_{1-20}$-Kohlenwasserstoff oder $C_{1-10}$-Alkyl, substituiert mit Alkoxy mit 1 bis 10 Kohlenstoffatomen, ist;
M Ti, Zr oder Hf ist;
jedes $R_1$ gleich oder unterschiedlich ist und eine $C_{1-6}$-Alkylgruppe oder $C_{1-6}$-Alkoxygruppe ist;
jedes n 1 bis 2 ist;
jedes $R_2$ gleich oder unterschiedlich ist und eine $C_{1-6}$-Alkylgruppe, $C_{1-6}$-Alkoxygruppe oder -$Si(R)_3$-Gruppe ist;
jedes R eine $C_{1-10}$-Alkyl- oder Phenylgruppe ist, die optional mit 1 bis 3 $C_{1-6}$-Alkylgruppen substituiert ist; und
jedes p 0 bis 1 ist.

**8.** Polyethylenmischung nach einem der vorhergehenden Ansprüche, wobei das LDPE eine $MFR_2$ (190°C, 2,16 kg, ISO 1133) im Bereich von 5,0 bis 18,0 g/10 min, bevorzugt im Bereich von 8,0 bis 17,0 g/10 min, mehr bevorzugt im Bereich von 10,0 bis 16,0 g/10 min, aufweist und/oder eine Dichte im Bereich von 912 bis 935 kg/$m^3$, bevorzugt im Bereich von 913 bis 930 kg/$m^3$ mehr bevorzugt im Bereich von 914 bis 925 kg/$m^3$ aufweist.

**9.** Polyethylenmischung nach einem der vorhergehenden Ansprüche, bestehend aus

a) 65,0 Gew.-% bis 98,0 Gew.-%, bevorzugt 75,0 Gew.-% bis 96,0 Gew.-%, mehr bevorzugt 80,0 Gew.-% bis 92,0 Gew.-%, bezogen auf das Gesamtgewicht der Polyethylenmischung, des multimodalen Metallocen-katalysierten linearen Polyethylens niedriger Dichte (mLLDPE) und
b) 2,0 bis 35,0 Gew.-%, bevorzugt 4,0 bis 25,0 Gew.-%, mehr bevorzugt 8,0 bis 20,0 Gew.-%, bezogen auf das Gesamtgewicht der Polyethylenmischung, des Polyethylens niedriger Dichte (LDPE), so dass sich die Gesamtmengen von a) + b) auf 100 Gew.-% summieren.

**10.** Polyethylenmischung nach einem der vorhergehenden Ansprüche, wobei in der Mischung das Verhältnis der $MFR_2$ des LDPE zur $MFR_2$ des mLLDPE im Bereich von > 1,0 bis zu 50,0, bevorzugt 2,0 bis 40,0, mehr bevorzugt 5,0 bis 30,0 und noch mehr bevorzugt 6,0 bis 20,0 ist.

**11.** Verwendung der Polyethylenmischung nach einem der vorhergehenden Ansprüche zur Herstellung einer einschichtigen Blasfolie.

**12.** Einschichtige Blasfolie, umfassend eine Polyethylenmischung nach einem der vorhergehenden Ansprüche 1 bis 10, wobei die Folie **gekennzeichnet ist, durch** das Aufweisen

a) einer Dart-Drop-Schlagzähigkeit (DDI), bestimmt nach ASTM D1709, Verfahren A, an einer 40 μm einschichtigen Testblasfolie von mindestens 550 g bis zu 1500 g, bevorzugt 600 g bis zu 1400 g und mehr bevorzugt 700 g bis zu 1200 g und

b) eine Trübung (gemessen an einer 40 µm einschichtigen Testblasfolie nach ASTM D 1003-00) von unter 15 %, bevorzugt zwischen 2 % und 12 %, mehr bevorzugt zwischen 4 % und 10 %.

**13.** Einschichtige Blasfolie nach Anspruch 12, wobei die Folie darüber hinaus
c) eine optomechanische Fähigkeit (OMA) gemäß der Formel (II) aufweist:

$$OMA = \frac{Tensile\ Modulus\ (MD)[MPa] * DDI\,(g)}{Haze\ (40\ \mu m)[\%]}$$

bestimmt an einer 40 µm Testblasfolie von mindestens 12.000 [MPa*g/%] bis 50.000 [MPa*g/%], bevorzugt im Bereich von 13.000 [MPa*g/%] bis 40.000 [MPa*g/%], mehr bevorzugt im Bereich von 14.000 [MPa*g/%] bis 30.000 [MPa*g/%], wobei der Zugmodul in Maschinenrichtung gemäß ISO 527-3 bei 23°C an 40 µm Testblasfolien gemessen wird, DDI die Dart-Drop-Schlagzähigkeit ist, die gemäß ASTM D1709, Verfahren A, an einer 40 µm Testblasfolie bestimmt wird, und die Trübung gemäß ASTM D1003 an einer 40 µm Testblasfolie gemessen wird.

**14.** Verwendung der Folie nach einem der vorhergehenden Ansprüche 12 bis 13 als Verpackungsmaterial, insbesondere als Verpackungsmaterial für Lebensmittel.

**15.** Verwendung der Folie nach einem der vorhergehenden Ansprüche 12 bis 13 als Schicht in mehrschichtigen Blasfolien auf Polyethylenbasis, bevorzugt als Kernschicht in mehrschichtigen Blasfolien auf Polyethylenbasis.

**Revendications**

**1.** Mélange de polyéthylène comprenant

a) 51,0 % en poids à 95,0 % en poids, sur la base du poids total du mélange de polyéthylène, d'un polyéthylène basse densité linéaire multimodal catalysé par métallocène (mLLDPE) qui consiste en

(i) 30,0 à 70,0 % en poids d'un composant polymère d'éthylène-1-butène (A), et
(ii) 70,0 à 30,0 % en poids d'un composant polymère d'éthylène-1-hexène (B),

le composant polymère d'éthylène-1-butène (A) ayant

une densité dans la plage de 920 à 950 kg/$m^3$,
un $MFR_2$ (190°C, 2,16 kg, ISO 1133) dans la plage de 2,0 à 400,0 g/10 min,
une teneur en 1-butène dans la plage de 1,5 à 8,0 % en poids, sur la base du composant polymère d'éthylène-1-butène (A) et

le composant polymère d'éthylène (B) ayant

une densité dans la plage de 895 à 918 kg/$m^3$,
un $MFR_2$ (190°C, 2,16 kg, ISO 1133) dans la plage de 0,01 à 1,5 g/10 min,
une teneur en 1-hexène dans la plage de 8,0 à 25,0 % en poids sur la base du composé polymère d'éthylène-1-hexène (B),

le polyéthylène basse densité linéaire multimodal catalysé par métallocène (mLLDPE) ayant
une densité dans la plage de 905 à 940 kg/$m^3$,

un $MFR_2$ (190°C, 2,16 kg, ISO 1133) dans la plage de 0,3 à 5,0 g/10 min et
un rapport entre le $MFR_{21}$ (190°C, 21,6 kg, ISO 1133) et le $MFR_2$ (190°C, 2,16 kg, ISO 1133), $MFR_{21}/MFR_2$, dans la plage de 20 à 50 ;
un indice de ramification $g'_{85-100}$ (déterminé par chromatographie par perméation de gel (GPC) comme décrit dans la partie expérimentale) de < 1,00 et

b) 1,0 à 49,0 % en poids, sur la base du poids total du mélange de polyéthylène, d'un polyéthylène basse densité (LDPE), ledit LDPE ayant

une densité dans la plage de 910 à 940 kg/$m^3$ ; et
un $MFR_2$ (190°C, 2,16 kg, ISO 1133) dans la plage de 1,5 à 20,0 g/10 min,

le rapport entre le $MFR_2$ du LDPE et le $MFR_2$ du mLLDPE étant > 1,0.

**2.** Mélange de polyéthylène selon la revendication 1, dans lequel, dans le polyéthylène basse densité linéaire multimodal catalysé par métallocène (mLLDPE), le composant polymère d'éthylène-1-butène (A) est constitué d'une fraction de polymère d'éthylène (A-1) et d'une fraction de polymère d'éthylène (A-2),

la fraction de polymère d'éthylène (A-1) ayant

une densité dans la plage de 920 à 950 kg/$m^3$, préférentiellement de 922 à 945 kg/$m^3$, plus préférentiellement de 925 à 940 kg/$m^3$ et
un $MFR_2$ (190°C, 2,16 kg, ISO 1133) dans la plage de 1,0 à 800,0 g/10 min, préférentiellement de 1,5 à 400,0 g/10 min, plus préférentiellement de 2,0 à 200,0 g/10 min et encore plus préférentiellement de 2,5 à 50,0 g/10 min, et

la fraction de polymère d'éthylène (A-2) ayant

une densité dans la plage de 920 à 950 kg/$m^3$, préférentiellement de 925 à 945 kg/$m^3$ et
un $MFR_2$ (190°C, 2,16 kg, ISO 1133) dans la plage de 1,5 à 400,0 g/10 min, préférentiellement de 2,0 à 200,0 g/10 min, plus préférentiellement de 2,5 à 40,0 g/10 min et encore plus préférentiellement de 3,0 à 10,0 g/10 min.

**3.** Mélange de polyéthylène selon la revendication 1 ou 2, dans lequel, dans le polyéthylène basse densité linéaire multimodal catalysé par métallocène (mLLDPE)

- le composant polymère d'éthylène (A) a un $MFR_2$ (190°C, 2,16 kg, ISO 1133) de 2,5 à 300 g/10 min, préférentiellement de 3,0 à 200 g/10 min, plus préférentiellement de 3,2 à 100 g/10 min et encore plus préférentiellement de 3,5 à 20 g/10 min, et
- le composant polymère d'éthylène (B) a un $MFR_2$ (190°C, 2,16 kg, ISO 1133) préférentiellement de 0,05 à 1,5 g/10 min, plus préférentiellement de 0,1 à 1,2 g/10 min et encore plus préférentiellement de 0,2 à 1,0 g/10 min.

**4.** Mélange de polyéthylène selon l'une des revendications précédentes, dans lequel, dans le polyéthylène basse densité linéaire multimodal catalysé par métallocène (mLLDPE), le rapport entre le $MFR_{21}$ (190°C, 21,6kg, ISO 1133) et $MFR_2$ (190°C, 2,16 kg, ISO 1133), $MFR_{21}/MFR_2$ est dans la plage de 22 à 40 et préférentiellement de 24 à 35.

**5.** Mélange de polyéthylène selon l'une des revendications précédentes, dans lequel, dans le polyéthylène basse densité linéaire multimodal catalysé par métallocène (mLLDPE), la quantité totale de 1-butène, sur la base du polyéthylène basse densité linéaire catalysé par métallocène (mLLDPE), est dans la plage de 0,6 à 3,0 % en poids, préférentiellement de 0,8 à 2,5 % en poids, et plus préférentiellement de 1,0 à 2,0 % en poids et
la quantité totale de 1-hexène, sur la base du polyéthylène basse densité linéaire catalysé par métallocène (mLLDPE), est dans la plage de 2,0 à 20,0 % en poids, préférentiellement de 4,0 à 18,0 % en poids, plus préférentiellement de 5,0 à 15,0 % en poids, et encore plus préférentiellement de 5,0 à 10,0 % en poids.

**6.** Mélange de polyéthylène selon l'une des revendications précédentes, dans lequel le polyéthylène basse densité linéaire multimodal catalysé par métallocène (mLLDPE) a un indice de ramification $g'_{85-100}$ (déterminé par chromatographie par perméation de gel (GPC) comme décrit dans la partie expérimentale) dans la plage de 0,80 à 0,98, préférentiellement de 0,85 à 0,96.

**7.** Mélange de polyéthylène selon l'une des revendications précédentes, dans lequel le polyéthylène basse densité linéaire multimodal catalysé par métallocène (mLLDPE) est produit en présence d'un complexe métallocène de formule (I) :

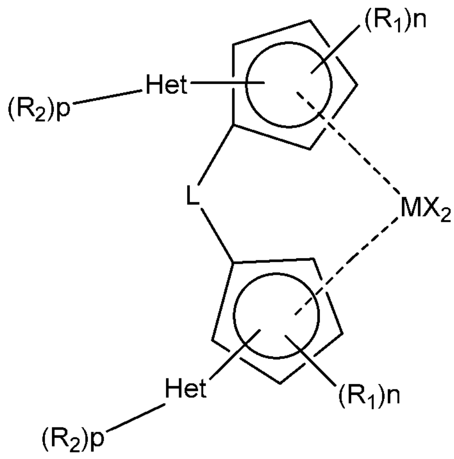

(I)

dans lequel chaque X est indépendamment un atome d'halogène, un groupe $C_{1-6}$-alkyle, un groupe $C_{1-6}$-alkoxy, un groupe phényle ou benzyle ;
chaque Het est indépendamment un groupe hétéroaromatique monocyclique contenant au moins un hétéroatome choisi parmi O ou S ;
L est $-R'_2Si-$, chaque R' étant indépendamment $C_{1-20}$-hydrocarbyle ou $C_{1-10}$-alkyle substitué par un alcoxy ayant de 1 à 10 atomes de carbone ;
M est Ti, Zr ou Hf ;
chaque $R_1$ est identique ou différent et est un groupe $C_{1-6}$-alkyle ou un groupe $C_{1-6}$-alcoxy ;
chaque n est de 1 à 2 ;
chaque $R_2$ est identique ou différent et est un groupe $C_{1-6}$-alkyle, un groupe $C_{1-6}$-alcoxy ou un groupe $-Si(R)_3$ ;
chaque R est un groupe $C_{1-10}$-alkyle ou phényle éventuellement substitué par 1 à 3 groupes $C_{1-6}$-alkyle ; et
chaque p est de 0 à 1.

**8.** Mélange de polyéthylène selon l'une des revendications précédentes, dans lequel le LDPE a un $MFR_2$ (190°C, 2,16 kg, ISO 1133) dans la plage de 5,0 à 18,0 g/10 min, préférentiellement de 8,0 à 17,0 g/10 min, plus préférentiellement de 10,0 à 16,0 g/10 min et/ou
une densité dans la plage de 912 à 935 kg/$m^3$, préférentiellement dans la plage de 913 à 930 kg/$m^3$, et plus préférentiellement dans la plage de 914 à 925 kg/$m^3$.

**9.** Mélange de polyéthylène selon l'une des revendications précédentes, dans lequel le mélange est constitué de

a) 65,0 % en poids à 98,0 % en poids, préférentiellement de 75,0 % en poids à 96,0 % en poids, plus préférentiellement de 80,0 % en poids à 92,0 % en poids, sur la base du poids total du mélange de polyéthylène, du polyéthylène basse densité linéaire multimodal catalysé par métallocène (mLLDPE) et
b) 2,0 à 35,0 % en poids, préférentiellement de 4,0 % en poids à 25,0 % en poids, plus préférentiellement de 8,0 % en poids à 20,0 % en poids, sur la base du poids total du mélange de polyéthylène, du polyéthylène basse densité (LDPE), les quantités totales de a) + b) totalisant 100 % en poids.

**10.** Mélange de polyéthylène selon l'une des revendications précédentes, dans lequel, dans le mélange, le rapport entre le $MFR_2$ du LDPE et le $MFR_2$ du mLLDPE est dans la plage de > 1,0 jusqu'à 50,0, préférentiellement de 2,0 à 40,0, plus préférentiellement de 5,0 à 30,0 et encore plus préférentiellement de 6,0 à 20,0.

**11.** Utilisation du mélange de polyéthylène selon l'une des revendications précédentes pour la préparation d'un film soufflé monocouche.

**12.** Film soufflé monocouche, comprenant un mélange de polyéthylène selon l'une des revendications précédentes 1 à 10, dans lequel le film est **caractérisé en ce qu'**il présente

a) une résistance à testeur d'impact falling dart (DDI) déterminée selon ASTM D1709, méthode A, sur un film soufflé d'essai monocouche de 40 $\mu$m d'au moins 550 g jusqu'à 1500 g, préférentiellement de 600 g jusqu'à 1400 g et plus préférentiellement de 700 g jusqu'à 1200 g et
B) un haze (mesuré sur un film soufflé d'essai monocouche de 40 $\mu$m selon ASTM D 1003-00) inférieur à 15 %,

préférentiellement entre 2 % et 12 %, plus préférentiellement entre 4 % et 10 %.

**13.** Film soufflé monocouche selon la revendication 12, dans lequel le film présente en outre c) une capacité optomécanique (OMA) selon la formule (II) :

$$OMA = \frac{Tensile\ Modulus\ (MD)[MPa] * DDI\ (g)}{Haze\ (40\ \mu m)[\%]}$$

déterminé sur un film soufflé d'essai de 40 μm d'au moins 12°000 [MPa*g/%] jusqu'à 50 000 [MPa*g/%], préférentiellement dans la plage de 13 000 [MPa*g/%] jusqu'à 40 000 [MPa*g/%], plus préférentiellement dans la plage de 14 000 [MPa*g/%] jusqu'à 30 000 [MPa*g/%], dans laquelle le module de traction dans la direction machine est mesuré selon ISO 527-3 à 23°C sur des films soufflés d'essai de 40 μm, DDI est la résistance à testeur d'impact falling dart déterminée selon ASTM D1709, méthode A, sur un film soufflé d'essai de 40 μm et le haze est mesuré selon ASTM D1003 sur un film soufflé d'essai de 40 μm.

**14.** Utilisation du film selon l'une des revendications précédentes 12 à 13 comme matériau d'emballage, en particulier comme matériau d'emballage pour des produits alimentaires.

**15.** Utilisation du film selon l'une des revendications précédentes 12 à 13 comme couche dans des films soufflés multicouches à base de polyéthylène, de préférence comme couche centrale dans des films soufflés multicouches à base de polyéthylène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022018239 A1
- EP 3298067 A1
- WO 2021191019 A1
- US 10494465 B2
- US 2020056004 A1
- WO 2016198273 A
- WO 2021009189 A
- WO 2021009190 A
- WO 2021009191 A
- WO 2021009192 A


### Non-patent literature cited in the description


- **KLIMKE, K.** ; **PARKINSON, M** ; **PIEL, C.** ; **KAMINSKY, W** ; **SPIESS, H.W.** ; **WILHELM, M.** *Macromol. Chem. Phys.*, 2006, vol. 207, 382
- **PARKINSON, M.** ; **KLIMKE, K** ; **SPIESS, H.W.** ; **WILHELM, M.** *Macromol. Chem. Phys.*, 2007, vol. 208, 2128
- **POLLARD, M** ; **KLIMKE, K.** ; **GRAF, R.** ; **SPIESS, H.W** ; **WILHELM, M.** ; **SPERBER, O.** ; **PIEL, C** ; **KAMINSKY, W**. *Macromolecules*, 2004, vol. 37, 813
- **FILIP, X** ; **TRIPON, C** ; **FILIP, C.** *J. Mag. Resn.*, 2005, vol. 176, 239
- **GRIFFIN, J.M.** ; **TRIPON, C.** ; **SAMOSON, A.** ; **FILIP, C** ; **BROWN, S.P.** *Mag. Res. in Chem.*, 2007, vol. 45, S1, S198
- **CASTIGNOLLES, P.** ; **GRAF, R.** ; **PARKINSON, M** ; **WILHELM, M.** ; **GABORIEAU, M.** *Polymer*, 2009, vol. 50, 2373
- **BUSICO, V** ; **CIPULLO, R.** *Prog. Polym. Sci.*, 2001, vol. 26, 443
- **BUSICO, V.** ; **CIPULLO, R** ; **MONACO, G.** ; **VACATELLO, M** ; **SEGRE, A.L.** *Macromoleucles*, 1997, vol. 30, 6251
- **ZHOU, Z.** ; **KUEMMERLE, R** ; **QIU, X** ; **REDWINE, D.** ; **CONG, R** ; **TAHA, A.** ; **BAUGH, D** ; **WINNIFORD, B.** *J. Mag. Reson.*, 2007, vol. 187, 225
- **BUSICO, V.** ; **CARBONNIERE, P** ; **CIPULLO, R.** ; **PELLECCHIA, R.** ; **SEVERN, J** ; **TALARICO, G.** *Macromol. Rapid Commun.*, 2007, vol. 28, 1128
- **RESCONI, L** ; **CAVALLO, L** ; **FAIT, A.** ; **PIEMONTESI, F.** *Chem. Rev.*, 2000, vol. 100, 1253